(19) Europäisches Patentamt
European Patent Office
Office européen des brevets

(11) Veröffentlichungsnummer: **0 262 376 B1**

(12) **EUROPÄISCHE PATENTSCHRIFT**

(45) Veröffentlichungstag der Patentschrift: **01.04.92**

(21) Anmeldenummer: **87112202.4**

(22) Anmeldetag: **22.08.87**

(51) Int. Cl.5: **C08L 61/06**, C08L 33/06, C08L 55/00, C08L 51/00, C09D 151/04, C09D 161/04, C09D 133/00, //(C08L61/06, 33:06,55:00,51:00),(C08L33/06, 61:06,55:00,51:00),(C08L55/00, 51:00,33:06,61:06),(C08L51/00, 55:00,33:06,61:06)

# (54) Wässrige Bindemitteldispersionen für die Herstellung von Anstrich- und Beschichtungsmitteln.

(30) Priorität: **30.08.86 DE 3629581**

(43) Veröffentlichungstag der Anmeldung:
**06.04.88 Patentblatt 88/14**

(45) Bekanntmachung des Hinweises auf die Patenterteilung:
**01.04.92 Patentblatt 92/14**

(84) Benannte Vertragsstaaten:
**AT BE CH DE ES FR GB IT LI NL SE**

(56) Entgegenhaltungen:
**DE-A- 3 422 216**
**DE-B- 2 427 960**
**GB-A- 1 459 843**
**GB-A- 2 091 744**
**US-A- 4 008 140**

(73) Patentinhaber: **BASF Aktiengesellschaft**
**Carl-Bosch-Strasse 38**
**W-6700 Ludwigshafen(DE)**

(72) Erfinder: **Gulbins, Erich, Dr.**
**Ladenburger Strasse 80**
**W-6900 Heidelberg(DE)**
Erfinder: **McKee, Graham Edmund, Dr.**
**Kastanienweg 8**
**W-6940 Weinheim(DE)**
Erfinder: **Ley, Gregor, Dr.**
**In den Trankstuecken**
**W-6719 Wattenheim(DE)**

EP 0 262 376 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft wäßrige Bindemitteldispersionen für die Herstellung von u.a. Anstrich- und Beschichtungsmitteln.

Beschichtungsmittel auf Basis einer Kombination aus wäßrigen Dispersionen und Phenolharzen sind bekannt. So wird in der DE-OS 34 22 216 ein Verfahren zur Herstellung eines Bindemittels auf Basis einer Kombination einer wäßrigen Dispersion eines synthetischen Polymeren und einem wasserunlöslichen Polykondensat aus Phenolen und Aldehyden und/oder Ketonen sowie die Verwendung dieser Bindemittel für lagerstabile Dispersionsfarben beschrieben. Derartige Dispersionen werden als hitzehärtbare Metallbeschichtungen verwendet, die neben den guten Eigenschaften, wie guter Korrisionsschutz, gute Chemikalienbeständigkeit sowie gute Haftung auch eine unzureichende Steinschlagfestigkeit aufweisen. Die Steinschlagfestigkeit ist ein Maß für das Verschleißverhalten der Beschichtung.

Der Erfindung lag daher die Aufgabe zugrunde, Beschichtungsmittel mit erhöhter Steinschlagfestigkeit zur Verfügung zu stellen.

Demgemäß wurden wäßrige Bindemitteldispersionen für die Herstellung von u.a. Anstrich- und Beschichtungsmitteln gefunden, enthaltend im wesentlichen

(A) 0,5 bis 50 Gew.% eines Phenolharz-Vorkondensates

(B) 20 bis 70 Gew.% eines in Form einer Dispersion vorliegenden und zur Kondensationsreaktion befähigtne Copolymerisates, enthaltend 0,1 bis 50 Gew.%, bezogen auf das Copolymerisat an Comonomeren mit Glycidylgruppen und gegebenenfalls zusätzlich Comonomeren mit Carboxylgruppen- oder Hydroxylgruppen udn als weitere Comonomere $C_1$-$C_{12}$-Alkylester der Acrylsäure oder Methacrylsäure, Vinylester von $C_2$-$C_4$-Carbonsäuren, $C_1$-$C_4$-Dialkylester der Maleinsäure oder Fumarsäure, Styrol, alpha-Methylstyrol, Vinyltoluol, Acrylnitril oder Methacrylnitril und

(C) 10 bis 70 Gew.% eines in Form einer Dispersion vorliegende Pfropfkautschuks aus einem Dienpolymerisat mit einem Dienanteil von 20 bis 100 Gew.% als Basispolymerem und einem Copolymerisat aus 0,1 bis 50 Gew.% Pfropfmonomeren mit polaren oder reaktiven Gruppen ausgewählt aus Hydroxyethylacrylat, Hydroxyethylmethacrylat, Hydroxypropylacrylat, Hydroxypropylmethacrylat, Butandiolmonoacrylat, Acrylsäure, Methacrylsäure, Maleinsäure, Itaconsäure, Vinylsulfonsäure, Acrylamidomethylpropansulfonsäure, Acrylamid, Methacrylamid und seine Derivate, insbesondere N-Methylol-acrylamid, N-Methylolmethacrylamid, t-Butylaminoethylacrylat, t-Butylaminoethylmethacrylat, Glycidylacrylat, Glycidylmethacrylat, Acrylsäure und Methacrylsäure und weiteren Pfropfmonomeren, ausgewählt aus Styrol, Acrylnitril, Methylacrylat, Methylmethacrylat, Ethylacrylat, Ethylmethacrylat, Isopropylacrylat, Isopropylmethacrylat, n-Butylacrylat, n-Butylmethacrylat, t-Butylacrylat, t-Butylmethacrylat, Ethylhexylacrylat, Ethylhexylmethacrylat, Laurylacrylat, Laurylmethacrylat, t-Butylacrylat, t-Butylmethacrylat, Vinylacetat und Vinylmethylether,

wobei sich die Mengenangaben auf den Feststoffgehalt der Gesamtmenge von (A), (B) und (C) beziehen.

Außerdem betrifft die Erfindung die Verwendung dieser Bindemitteldispersionen für die Herstellung von wäßrigen Anstrich- und Beschichtungsmitteln sowie wäßrige Anstrich- und Beschichtungsmittel, welche diese Dispersionen enthalten.

Bei der Komponente (A) handelt es sich um Phenolharz-Vorkondensate, worunter niedrig kondensierte Phenolharze mit Methylol- und/oder Methylolether-Gruppen zu verstehen sind.

Zur Herstellung der Komponente (A) wird eine phenolische Komponente mit Aldehyden, die teilweise durch Ketone ersetzt sein können, nach allgemein bekannten Methoden kondensiert.

Als phenolische Komponenten können z.B. folgende Phenole verwendet werden: Phenol, alkylsubstituierte Phenole mit 1 bis 12 Kohlenstoffatomen in der Alkylgruppe, wie Octyl-, Nonyl-, Dodecylphenol, arylsubstituierte Phenole wie 2-Hydroxy-biphenyl, 4-Hydroxy-biphenyl, Bisphenole der allgemeinen Formel

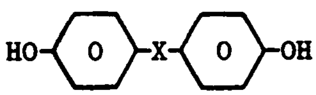 ,

worin X einen (verzweigten) Alkylrest mit 1 bis 12, vorzugsweise 3 bis 7 Kohlenstoffatomen oder auch $-SO_2-$ bedeutet, insbesondere Bisphenol A und Bisphenol S (4,4'-Dihydroxydiphenylsulfon) oder deren Mischungen. Bevorzugt sind Bisphenol A und Bisphenol S, insbesondere Gemische von Bisphenol A mit Bisphenol S, alkylsubstituierten Phenolen und/oder Hydroxybiphenyl.

Als Aldehyde, die teilweise durch Ketone ersetzt sein können, kommen Formaldehyd, Acetaldehyd sowie ihre oligomeren Formen, Acrolein und Dialdehyde wie Glutardialdehyd in Betracht, die gegebenenfalls

teilweise durch Ketone, wie Aceton, ersetzt sein können. Bevorzugt sind Formaldehyd, Paraformaldehyd und Acetaldehyd als Carbonylkomponenten für die Polykondensation.

Das molare Verhältnis der phenolischen Komponente zu Carbonylgruppen der Aldehyde und/oder Ketone kann zwischen etwa 0,33 : 1 bis 1,25 : 1 variiert werden. Bevorzugt ist ein Verhältnis von 0,4 : 1 bis 0,67 : 1. Besonders bevorzugt ist ein Verhältnis von etwa 0,5 : 1.

Als Komponente (B) können Copolymerdispersionen verwendet werden, deren Copolymerisate Glycidyl-, sowie gegebenenfalls zusätzlich Carboxyl- oder Hydroxylgruppen enthalten. Diese funktionellen Gruppen können mit dem Phenolharz-Vorkondensat (A) oder einer zu dessen Herstellung verwendeten Komponente kondensieren.

Die obengenannten funktionellen Gruppen im Copolymerisat werden auf übliche Weise durch Einpolymerisieren solche Gruppen enthaltender Monomerer, die diese funktionellen Gruppen tragen, erhalten.

Die Copolymerisate enthalten die obengenannten funktionellen Gruppen im allgemeinen in solchen Mengen, daß sie 0,1 bis 50, vorzugsweise 0,3 bis 15, insbesondere 0,5 bis 10 Gew.%, bezogen auf das Copolymerisat, dieser Monomeren mit funktionellen Gruppen einpolymerisiert enthalten.

Als Comonomere der Monomeren mit den vorgenannten funktionellen Gruppen eignen sich die üblichen, damit copolymerisierbaren olefinisch ungesättigten Monomeren, z.B. $C_1$-$C_{12}$-Alkylester der Acrylsäure und Methacrylsäure, bevorzugt $C_1$-$C_8$-Alkylester, z.B. Methacrylat, Methylmethacrylat, Ethylacrylat, Ethylmethacrylat, Propylacrylat, Propylmethacrylat, Butylacrylat, Butylmethacrylat, 2-Ethylhexylacrylat, 2-Ethylhexylmethacrylat, Laurylacrylat und Laurylmethacrylat; Vinylester von $C_2$-$C_4$-Carbonsäuren, z.B. Vinylacetat und Vinylpropionat, $C_1$-$C_4$-Dialkylester der Maleinsäure und Fumarsäure, Vinylaromaten wie Styrol, alpha-Methylstryol, Vinyltoluol; Acrylnitril, Methacrylnitril, in geringen Mengen von bis zu 5 Gew.% des Copolymeren Acrylamid, Methacrylamid sowie Vinylether mit 3 bis 10 Kohlenstoffatomen, Vinylhalogenide, wie Vinylchlorid und Vinylidenchlorid; mehrfach olefinisch ungesättigte Verbindungen wie Butadien und Isopren sowie Gemische der vorgenannten Monomeren, soweit sie miteinander copolymerisierbar sind. Bevorzugte Comonomere sind Acrylsäureester, Methacrylsäureester, Acrylnitril, Methacrylnitril, Vinylchlorid, Vinylidenchlorid, Styrol und Butadien.

Die Herstellung der Pfropf-Kautschukdispersion (C) ist beispielsweise in der DE-AS 24 27 960 oder der DE-OS 33 13 919 beschrieben und wird in zwei Stufen durchgeführt. In der ersten Stufe wird durch Homo- bzw. Copolymerisation von Butadien, Isopren, höheren Alkylestern der Acrylsäure und Methacrylsäure die sogenannte Weichphase hergestellt. Man verwendet Weichphasen, die Glastemperaturen von -80 bis -20 °C, besonders -70 bis -30 °C aufweisen. Derartige Copolymere haben einen Dienanteil von etwa 20 - 100 Gew.% der Gesamtmenge aller Monomeren. Die Latexteilchen dieser Stufe sind je nach den verwendeten Monomeren unvernetzt bis vernetzt.

Die Dispersion der ersten Stufe kann entweder direkt weiterverwendet werden oder wird vor der Weiterverwendung einem Agglomerationsprozeß unterworfen. Bei diesem Prozeß wird eine zweite Dispersion zugegeben, deren Teilchen sich aufgrund eines speziellen Aufbaues an die Teilchen des Kautschuklatex anlagern und somit vergrößern. Solch ein Prozeß ist z.B. in "Angewandte Makromolekulare Chemie", Band 2 (1968), Seiten 1 bis 25 beschrieben.

Die Agglomeration wird bevorzugt bei Weichphasenteilchen auf Butadien- oder Isopren-Comonomer-Basis durchgeführt, da deren Polymerisation in feinteiligen Dispersionen deutlich schneller verläuft als in grobteiligen. Für die zweite Stufe der Emulsionspolymerisation ist aber die höhere Stabilität der grobteiligeren Dispersion vorteilhaft.

In der zweiten Stufe wird die Dispersion der ersten Stufe durch Emulsionspolymerisation mit weiteren, die sogenannte Pfropfhülle bildenden Monomeren gepfropft. Bevorzugte Pfropfmonomere sind Styrol, Acrylnitril, Methylacrylat, Methylmethacrylat, Ethylacrylat, Ethylmethacrylat, Isopropylacrylat, Isopropylmethacrylat, n-Butylacrylat, n-Butylmethacrylat, t-Butylacrylat, t-Butylmethacrylat, Ethylhexylacrylat, Ethylhexylmethacrylat, Laurylacrylat, Laurylmethacrylat, t-Butylacrylat, t-Butylmethacrylat, Acrylsäure, Methacrylsäure, Vinylacetat und Vinylmethylether. Die Pfropfhülle ist zu 0,1 bis 50 Gew.% aus Pfropfpolymeren mit polaren oder reaktiven Gruppen aufgebaut. Als derartige Monomere kommen in Betracht: Hydroxyethylacrylat, Hydroxyethylmethacrylat, Hydroxypropylacrylat, Hydroxypropylmethacrylat, Butandiolmonoacrylat, Acrylsäure, Methacrylsäure, Maleinsäure, Itaconsäure, Vinylsulfonsäure, Acrylamidomethylpropansulfonsäure, Acrylamid, Methacrylamid und seine Derivate, insbesondere N-Methylol-acrylamid, N-Methylolmethacrylamid, t-Butylaminoethylacrylat, t-Butylaminoethylmethacrylat, Glycidylacrylat Glycidylmethacrylat, Acrylsäure und Methacrylsäure.

Die Emulsionspolymerisationen zur Herstellung der Komponenten (B) und (C) können wie üblich z.B. unter Verwendung von Initiatoren wie Wasserstoffperoxid, Natrium(Kalium)persulfat, organischen Peroxiden oder von üblichen Redox-Initiatorsystemen, Reglern wie Merkaptanen, Emulgatoren/Schutzkolloiden wie z.B. $C_{12}$-$C_{18}$-Paraffinsulfonsäure-Na-Salz oder Salzen von sauren Schwefelsäurehalbestern von EO(PO)-Addukten (vgl. Beispiel 2) und anderen üblichen Hilfsstoffen vorgenommen werden, so daß sich weitere Ausführungen erübrigen.

Die Herstellung der Bindemitteldispersion kann so durchgeführt werden, daß das Phenolharz-Vorkondensat in der Dispersion (B), der Dispersion (C) oder in der Mischung aus den Dispersionen (B) und (C) gebildet wird.

Dazu wird die phenolische Komponente mit der jeweiligen Dispersion bzw. dem Gemisch aus zwei Dispersionen, beispielsweise unter Rühren, vorzugsweise bei 50 bis 150°C, gegebenenfalls unter Druck vermischt. Die phenolischen Komponenten können in fester oder flüssiger Form zur wäßrigen Primärdispersion zugegeben werden, wobei gegebenenfalls die Temperatur zum Zeitpunkt der Zugabe niedriger ist als bei dem nachfolgenden Einmischen.

Die Kondensation von phenolischer Komponente mit Aldehyd (oder Keton) zur Bildung des Phenolharz-Vorkondensats in den wäßrigen Dispersionen kann bei Temperaturen zwischen Raumtemperatur und etwa 200°C, gegebenenfalls unter Druck, vorzugsweise zwischen 50 und 100°C, gegebenenfalls auch unter Zusatz von sauren oder basischen Katalysatoren wie anorganischen oder organischen Säuren, Ammoniak oder Aminen durchgeführt werden. Abhängig von den Kondensationsbedingungen und den verwendeten Katalysatoren werden novolak-, resol- oder resitartige Harze gewonnen. Das Mischungsverhältnis Copolymerisat/Phenolharz kann von 0,25 : 1 bis 99 : 1 variiert werden, bevorzugt ist ein Mischungsverhältnis von 1 : 1 bis 4 : 1. Der Feststoffgehalt der Dispersion kann zwischen 10 und 70 Gew.%, vorzugsweise zwischen 30 und 60 Gew.% liegen.

Die Bindemitteldispersionen werden bevorzugt zur Herstellung von hitzehärtbaren Metallbeschichtungen mit sehr guten Beständigkeiten gegen Stoß sowie Verformungsbeanspruchung (Steinschlagfestigkeit) verwendet. Dabei bleiben gute Eigenschaften der aus diesen Bindemitteln hergestellten Lacie wie guter Korrosionsschutz und gute Chemikalienbeständigkeit im wesentlichen erhalten. Darüber hinaus zeigen sie ausgezeichnete Haftung auf vielen Kunststoffteilen, wie sie im heutigen Fahrzeugbau zunehmend eingesetzt werden, insbesondere auf Polyamiden.

I. Herstellung einer Komponente (B)

In einem Kolben mit zwei Zulaufgefäßen wurden vorgelegt: 32,1 g VE-Wasser (= vollentsalztes Wasser)
als Zulauf 1 diente eine Mischung aus
14,4 g VE-Waser, 2,14 g einer 35 gew.%igen wäßrigen Lösung des Salzes eines schwefelsauren Halbesters eines Anlagerungsproduktes von ca. 25 mol Ethylenoxid an Octylphenol
17,55 g n-Butylacrylat,
10,35 g Styrol,
9,9 g Methylmethacrylat,
5,4 g Glycidylmethacrylat,
1,8 g Acrylsäure.

Im Zulaufgefäß 2 war eine Lösung von 0,225 g Kaliumperoxidisulfat in 6 g Wasser.

Der Kolben wurde auf 85°C aufgeheizt, 5 % des Zulaufs 2 zugegeben und dann Zulauf 1 und Zulauf 2 innerhalb von 2 1/4 Stunden nebeneinander kontinuierlich dem Reaktor zudosiert. Man hielt die Temperatur noch 1 Stune bei 85°C und kühlte dann ab.

Man erhielt eine Dispersion mit einem Feststoffgehalt von ca. 46 Gew.%, einem pH-Wert von etwa 2,2 und einem LD-Wert von ca. 50, entsprechend einem mittleren Teilchendurchmesser von ungefähr 250 nm.

II. Herstellung einer Pfropfkautschuk-Dispersion (C)

a) Stufe 1
Ein Gemisch aus
423 g Butadien
564 g VE-Wasser
8,6 g einer 40 gew.%igen wäßrigen Lösung des Natriumsalzes einer $C_{12}/C_{18}$-Paraffinsulfonsäure
1,33 g Kaliumpersulfat
0,37 g 25 gew.%ige wäßrige Ammoniaklösung
2,18 g t-Dodecylmercaptan
wurde bei 65°C polymerisiert. Zunächst wurde etwa 15 Gew.% des Butadiens vorgelegt und der Rest über einen Zeitraum von 6 Stunden zugegeben. Nach 10 Stunden Polymerisationszeit wurden weitere 2,18 g t-Dodecylmercaptan zudosiert. Nach 22 Stunden wurde abkühlen lassen und filtriert. Der

Feststoffanteil der Dispersion betrug 42,7 Gew.%.

b) Stufe 2

296 g dieser Dispersion wurden in einen Kessel gefüllt und 3,16 g einer wäßrigen Lösung des Natriumsalzes einer $C_{12}/C_{18}$-Parrafinsulfonsäure sowie 13,2 g einer 40 gew.%igen wäßrigen Ethylacrylat/Methacrylamid-Copolymer-Dispersion zugegeben, was eine Agglomeration der Latexteilchen bewirkte.

Nach Zugabe von 3,16 g einer 40 gew.%igen wäßrigen Lösung des Natriumsalzes einer $C_{12}/C_{18}$-Paraffinsulfonsäure und 0,17 g einer 7 gew.%igen wäßrigen Lösung von Kaliumpersulfat wurden über einen Zeitraum von 4 Stunden bei 75 °C 53,1 g n-Butylacrylat und 3,39 g Methacrylsäure zudosiert. 2 Stunden nach Ende des Zulaufes wurde auf Raumtemperatur abgekühlt. Der Feststoffgehalt der Dispersion betrug 50,5 Gew.%.

III. Herstellung einer Komponente (A) in einer Komponente (B)

In einem Kolben wurden 200 g der gemäß I hergestellten Dispersion, 50 g Wasser, 25 g Bisphenol A und 25 g Octylphenol (technisch) vorgelegt und unter Rühren auf 90 °C erhitzt. Nach 1 1/2 stündigem Rühren bei dieser Temperatur wurden 40 Teile einer 37 gew.%igen wäßrigen Formalinlösung zugegeben und der Ansatz mit Hilfe von ca. 30 g konzentrierten wäßrigen Ammoniaks auf pH 8,5 eingestellt. Nach einer Kondensationszeit von 3 Stunden bei 90 °C unter Rühren wurde abgekühlt.

Man erhielt eine dünnflüssige Dispersion mit einem Feststoffgehalt von ca. 43 Gew.%, einem pH-Wert von 10,3 und einem LD-Wert von ca. 32.

IV. Herstellung einer Komponente (A) in einer Komponente (C)

In einem Kolben wurden 1800 g der gemäß II hergestellten Pfropfkautschuk-Dispersion, 300 g VE-Wasser und 11 g N,N-Dimethylethanolamin vorgelegt. Dann wurden unter Rühren 100 g Bisphenol A zugegeben, der Ansatz aufgeheizt und 1,5 Stunden bei 90 °C gerührt. Dann wurden 80 g einer 37 gew.%igen Formalinlösung hinzugegeben und nach 1 Stunde 55 Teile Dimethylethanolamin. Der Ansatz wurde noch weitere 4 Stunden bei 90 °C gehalten. Nach dem Abkühlen wurde eine relativ niedrigviskose, koagulatfreie Dispersion mit einem Feststoffgehalt von ca. 44 Gew.%, einem pH-Wert von ca. 10, einem LD-Wert von ca. 17 und einer mittleren Teilchengröße (Nanosizer) von 550 nm erhalten.

V. Herstellung einer Komponente (A) in einer Komponente (C)

In einem Kolben wurden 1800 g der gemäß II hergestellten Dispersion, 500 g VE-Wasser und 11 g N,N-Dimethylethanolamin vorgelegt. Dann wurden unter Rühren 500 g Bisphenol A zugegeben, der Ansatz aufgeheizt und 1,5 Stunden bei 90 °C gerührt. Dann wurden 80 g einer 37 gew.%igen Formalinlösung zugegeben und nach 1 Stunde 55 g Dimethylethanolamin. Der Ansatz wurde noch weitere 4 Stunden bei 90 °C gehalten. Nach dem Abkühlen wurde eine relativ niederviskose, koagulatfreie Dispersion mit einem Feststoffgehalt von ca. 44 Gew.%, einem pH-Wert von 9,4, einem LD-Wert von ca. 8 erhalten.

Vergleichsbeispiel

740,3 g der gemäß III hergestellten phenolharzhaltigen Dispersion
41,9 g Dipropylglykol
2,0 g des Korrosionsinhibitors 562 der Firma Erbsloeh (Düsseldorf) (organische Ammoniumnitritlösung)
2,9 g 2,4,7,9-Tetramethyl-5-decin-4,7-diol, 50 gew.%ig in Ethylenglykol
1,4 g Kaliumsalz eines phosphatierten Alkohols (Strodex MOK 70, 70 gew.%ig in Waser, Dekter Chem. Corp.)
13,9 g des Verdickers Collacral® PU85 der Firma BASF, 25 %ig in Wasser/Butyldiglykol (Polyurethanverdicker)
193,6 g Titandioxid, Rutil
3,3 g Lichtblau 100 der Firma Bayer Leverkusen
0,7 g Ruß (Flammruß 101, geperlt der Firma Degussa)
wurden 72 Stunden in einer Kugelmühle angerieben und anschließend filtriert. Das Konzentrat wurde mit VE-Wasser auf eine Sptritzviskosität von ca. 18 bis 20 Sekunden Auslaufzeit/DIN 4-Becher eingestellt und auf blanke, entfettete und lösungsmittelgereinigte Stahlbleche (UST 1405) sowie auf handelsübliche zinkphosphatierte, nachbehandelte und ofengetrocknete Stahlbleche ("Bonder") appliziert. Nach dem Einbrennen (30 Minuten bei 150°C in einem Umlufteinbrennofen) wurden Schichtstärke und mechanische Werte bestimmt (Tabelle).

Beispiel 1

In der Lackrezeptur des Vergleichsbeispiels wurde die gemäß III hergestellte Dispersion durch folgende erfindungsgemäße Dispersion ersetzt:
528,3 g der gemäß III hergestellten Dispersion
211,9 g einer 48,1 gew.%igen Pfropfkautschuk-Dispersion der Zusammensetzung
70 Gew.% Polybutadien mit einer Pfropfhülle aus
28,5 Gew.% n-Butylacrylat und
1,5 Gew.% Glycidylmethacrylat
die gemäß III hergestellt wurde,
0,1 g Triethanolamin, 50 gew.%ig in Wasser
die Kautschukdispersion wurde zunächst mit Triethanolamin neutralisiert und anschließend in die Dispersion III bei Raumtemperatur eingerührt.

Nach Formulierung, Applikation und Einbrennen des Lackes wurden die in der Tabelle beschriebenen mechanischen Eigenschaften gefunden.

Beispiel 2

In der Lackrezeptur des Vergleichsbeispiels wurde die gemäß III hergestellte Dispersion durch folgende erfindungsgemäße Dispersion ersetzt:
528,3 g einer gemäß III hergestellten Dispersion
+ 207,0 g einer 49,2 gew.%igen Pfropfkautschuk-Dispersion der Zusammensetzung
70 Gew.% Polybutadien mit einer Pfropfhülle aus
28,2 Gew.% n-Butylacrylat und
1,8 Gew.% Methacrylsäure,
die gemäß III hergestellt wurde,
5.0 g Triethanolamin, 50 gew.%ig in Wasser,
nach Formulierung, Applikation und Einbrennen des Lackes wurden die in der Tabelle beschriebenen mechanischen Eigneschaften gefunden.

Beispiel 3

In der Lackrezeptur des Vergleichsbeispiels wurde die gemäß III hergestellte Dispersion durch folgende erfindungsgemäße Dispersion ersetzt:
527,89 g einer gemäß III hergestellten Dispersion
+ 211,60 g einer 50-gew.%igen Pfropfkautschuk-Dispersion der Zusammensetzung
70 Gew.% Polybutadien mit einer Pfropfhülle aus
29,4 Gew.% n-Butylacrylat und
0,6 Gew.% Methylacrylsäure,
die gemäß III hergestellt wurde,
0,90 g Dimethylethanolamin
nach Formulierung, Applikation und Einbrennen des Lackes wurden die in der Tabelle beschriebenen mechanischen Eigenschaften gefunden.

Tabelle: Mechanische Eigenschaften der Lackfilme

| | Vergleichsbeispiel Blankes Stahlblech | Vergleichsbeispiel Zinkphosphatiertes Stahlblech | Beispiel 1 Blankes Stahlblech | Beispiel 1 Zinkphosphatiertes Stahlblech | Beispiel 2 Blankes Stahlblech | Beispiel 2 Zinkphosphatiertes Stahlblech | Beispiel 3 Blankes Stahlblech | Beispiel 3 Zinkphosphatiertes Stahlblech |
|---|---|---|---|---|---|---|---|---|
| Einbrennbedingungen | 30' / 150°C | | | | | | | |
| Schichtstärke [µm] | 38 | 38 | 35 | 35 | 35 | 34 | 42 | 35 |
| Pendeldämpfung nach Erichsen (DIN 53 157) (Ausschlag) | 142 | 117 | 121 | 114 | 147 | 140 | 132 | 116 |
| Erichsentiefung [mm] (DIN 53 156) | 4,0 | 3,8 | 8,9 | 7,1 | 9,0 | 9,1 | 8,4 | 7,3 |
| Gitterschnitt (DIN 53 151) | 0-1 | 0-1 | 0 | 0 | 0 | 0 | 0 | 0 |

## Patentansprüche

1. Wäßrige Bindemitteldispersionen für die Herstellung von Anstrich- und Beschichtungsmitteln, enthaltend im wesentlichen

(A) 0,5 bis 50 Gew.% eines Phenolharz-Vorkondensates

(B) 20 bis 70 Gew.% eines in Form einer Dispersion vorliegenden und zur Kondensationsreaktion befähigten Copolymerisates, enthaltend 0,1 bis 50 Gew.%, bezogen auf das Copolymerisat, an Comonomeren mit Glycidylgruppen und gegebenenfalls zusätzlich Comonomeren mit Carboxylgruppen oder Hydroxylgruppen und als weitere Comonomere $C_1$-$C_{12}$-Alkylester der Acrylsäure oder Methacrylsäure, Vinylester von $C_2$-$C_4$-Carbonsäuren, $C_1$-$C_4$-Dialkylester der Maleinsäure oder Fumarsäure, Styrol, alpha-Methylstyrol, Vinyltoluol, Acrylnitril oder Methacrylnitril und

(C) 10 bis 70 Gew.% eines in Form einer Dispersion vorliegenden Pfropfkautschuks aus einem Dienpolymerisat mit einem Dienanteil von 20 bis 100 Gew.% als Basispolymerem und einem Copolymerisat aus 0,1 bis 50 Gew.% Pfropfmonomeren mit polaren oder reaktiven Gruppen, ausgewählt aus Hydroxyethylacrylat, Hydroxyethylmethacrylat, Hydroxypropylacrylat, Hydroxypropylmethacrylat, Butandiolmonoacrylat, Acrylsäure, Methacrylsäure, Maleinsäure, Itaconsäure, Vinylsulfonsäure, Acrylamidomethylpropansulfonsäure, Acrylamid, Methacrylamid, N-Methylol-acrylamid, N-Methylolmethacrylamid, t-Butylaminoethylacrylat, t-Butylaminoethylmethacrylat, Glycidylacrylat, Glycidylmethacrylat, Acrylsäure und Methacrylsäure und weiteren Pfropfmonomeren, ausgewählt aus Styrol, Acrylnitril, Methylacrylat, Methylmethacrylat, Ethylacrylat, Ethylmethacrylat, Isopropylacrylat, Isopropylmethacrylat, n-Butylacrylat, n-Butylmethacrylat, t-Butylacrylat, t-Butylmethacrylat, Ethylhexylacrylat, Ethylhexylmethacrylat, Laurylacrylat, Laurylmethacrylat, t-Butylacrylat, t-Butylmethacrylat, Vinylacetat und Vinylmethylether,

wobei sich die Mengenangaben auf den Feststoffgehalt der Gesamtmenge von (A), (B) und (C) beziehen.

2. Wäßrige Bindemitteldispersionen nach Anspruch 1, bei denen das Phenolharz-Vorkondensat in der Dispersion (B), in der Dispersion (C) oder in der Mischung aus den Dispersionen (B) und (C) hergestellt worden ist.

3. Wäßrige Bindemitteldispersionen nach den Ansprüchen 1 und 2, bei denen die Teilchen des Basispolymeren der Dispersion (C) vor der Pfropfung durch Agglomeration vergrößert worden sind.

4. Verwendung der wäßrigen Bindemitteldispersionen gemäß den Ansprüchen 1 bis 3 für die Herstellung von wäßrigen Anstrich- und Beschichtungsmitteln.

5. Wäßrige Anstrich- und Beschichtungsmittel, enthaltend als Bindemittel die Bindemitteldispersionen gemäß den Ansprüchen 1 bis 3.

## Claims

1. An aqueous binder dispersion for the preparation of paints and finishes, substantially containing

(A) from 0.5 to 50% by weight of a phenolic resin precondensate,

(B) from 20 to 70% by weight of a copolymer containing from 0.1 to 50% by weight, based on the copolymer, of a comonomer having glycidyl groups and optionally in addition a comonomer having carboxyl or hydroxyl groups and as further comonomers $C_1$-$C_{12}$ alkyl esters of acrylic or methacrylic acid, vinyl esters of $C_2$-$C_4$-carboxylic acids, $C_1$-$C_4$-dialkyl esters of maleic acid or fumaric acid, styrene, alpha-methylstyrene, vinyl toluene, acrylo nitrile or methacrylo nitrile, the copolymer being in the form of a dispersion and being capable of a condensation reaction, and

(C) from 10 to 70% by weight of a graft rubber comprising a diene polymer having a diene content of from 20 to 100% by weight as the base polymer and a copolymer comprising from 0.1 to 50% by weight of a graft monomer having polar or reactive groups, selected from the group consisting of hydroxyethyl acrylate, hydroxyethyl methacrylate, hydroxypropyl acrylate, hydroxypropyl methacrylate, butanediol monoacrylate, acrylic acid, methacrylic acid, maleic acid, itaconic acid, vinylsulfonic acid, acrylamidomethylpropanesulfonic acid, acrylamide, methacrylamide, N-methylolacrylamide, N-methylolmethacrylamide, t-butylaminoethyl acrylate, t-butylaminoethyl methacrylate, glycidyl acrylate, glycidyl methacrylate, acrylic acid and methacrylic acid and further graft monomers selected from the group consisting of styrene, acrylonitrile, methyl acrylate, methyl methacrylate, ethyl acrylate, ethyl methacrylate, isopropyl acrylate, isopropyl methacrylate, n-butylacrylate, n-butyl methacrylate, t-butyl acrylate, t-butyl methacrylate, ethylhexyl acrylate, ethylhexyl methacrylate, lauryl acrylate, lauryl methacrylate, vinyl acetate and vinyl methyl ether, the graft rubber being in the form of a dispersion,

the percentages being based on the solids content of the total amount of (A), (B) and (C).

2. An aqueous binder dispersion as claimed in claim 1, in which the phenolic resin precondensate has been prepared in dispersion (B), in dispersion (C) or in the mixture of dispersions (B) and (C).

3. An aqueous binder dispersion as claimed in claim 1 or 2, wherein the particles of the base polymer of dispersion (C) have been enlarged by agglomeration prior to grafting.

4. Use of the aqueous binder dispersion as claimed in claim 1 or 2 or 3 for the preparation of an aqueous paint or finish.

5. An aqueous paint or finish containing as binder the binder dispersion as claimed in claim 1 or 2 or 3.

**Revendications**

1. Dispersions aqueuses de liants pour la fabrication d'agents ou compositions de revêtement et de peinture, qui contiennent, en essence,
   (A) 0,5 à 50% en poids d'un précondensat de résine phénolique
   (B) 20 à 70% en poids d'un copolymère pouvant subir une réaction de condensation, qui se présente sous la forme d'une dispersion et qui contient de 0,1 à 50% en poids, par rapport au copolymère, de comonomères avec des radicaux glycidyle et éventuellement complémentairement des comonomères avec des radicaux carboxyle ou des radicaux hydroxyle et, à titre de comonomère supplémentaire, des esters alkyliques en $C_1$-$C_{12}$ de l'acide acrylique ou de l'acide méthacrylique, des esters vinyliques d'acides carboxyliques en $C_2$ à $C_4$, des esters dialkyliques en $C_1$ à $C_4$ de l'acide maléique ou de l'acide fumarique, du styrène, de l'alpha-méthylstyrène, du vinyltoluène, de l'acrylonitrile ou du méthacrylonitrile et
   (C) 10 à 70% en poids d'un caoutchouc de greffage, présent sous forme d'une dispersion, constitué d'un polymère de diène avec une fraction de diène de 20 à 100% en poids à titre de polymère de base et d'un copolymère de 0,1 à 50% en poids de monomères de greffage avec des radicaux polaires ou réactifs, choisis parmi l'acrylate d'hydroxyéthyle, le méthacrylate d'hydroxyéthyle, l'acrylate d'hydroxypropyle, le méthacrylate d'hydroxypropyle, le monoacrylate de butanediol, l'acide acrylique, l'acide méthacrylique, l'acide maléique, l'acide itaconique, l'acide vinylsulfonique, l'acide acrylamidométhylpropanesulfonique, l'acrylamide, le méthacrylamide, le N-méthylol-acrylamide, le N-méthylol-méthacrylamide, l'acrylate de t-butylaminoéthyle, le méthacrylate de t-butylaminoéthyle, l'acrylate de glycidyle, le méthacrylate de glycidyle, l'acide acrylique et l'acide méthacrylique et d'autres monomères de greffage, choisis parmi le styrène, l'acrylonitrile, l'acrylate de méthyle, le méthacrylate de méthyle, l'acrylate d'éthyle, le méthacrylate d'éthyle, l'acrylate d'isopropyle, le méthacrylate d'isopropyle, l'acrylate de n-butyle, le méthacrylate de n-butyle, l'acrylate de t-butyle, le méthacrylate de t-butyle, l'acrylate d'éthylhexyle, le méthacrylate d'éthylhexyle, l'acrylate de lauryle, le méthacrylate de lauryle, l'acrylate de t-butyle, le méthacrylate de t-butyle, l'acétate de vinyle et l'éther vinylméthylique,

   où les indications des proportions se rapportent à la teneur en corps solides de la quantité totale de (A), (B) et (C).

2. Dispersions aqueuses de liants selon la revendication 1, caractérisées en ce que le précondensat de résine phénolique a été préparé dans la dispersion (B), dans la dispersion (C), ou dans le mélange des dispersions (B) et (C).

3. Dispersions aqueuses de liants selon les revendications 1 et 2, caractérisées en ce que les particules du polymère de base de la dispersion (C) sont agrandies par agglomération avant le greffage.

4. Utilisation des dispersions aqueuses de liants selon les revendications 1 à 3 pour la fabrication d'agents ou compositions de revêtement et de peinture.

5. Compositions et agents de revêtement et de peinture aqueux, contenant les dispersions de liants selon les revendications 1 à 3 à titre de liants.